# EUROPÄISCHE PATENTSCHRIFT

(11) **EP 3 515 354 B1**
(45) Veröffentlichungstag und Bekanntmachung des Hinweises auf die Patenterteilung: **09.06.2021**
(21) Anmeldenummer: 17771370.8
(22) Anmeldetag: 12.09.2017
(51) Int. Cl.: A61C 3/025, B24C 7/00

(54) **ZAHNREINIGUNGSSYSTEM UND PULVERBEHÄLTER UMFASSEND EINSATZ FÜR EINEN PULVERBEHÄLTER**
DENTAL CLEANING SYSTEM AND POWDER CONTAINER COMPRISING INSERT FOR A POWDER CONTAINER
SYSTÈME DE NETTOYAGE DENTAIRE ET RÉCIPIENT DE POUDRE COMPRENANT INSERT POUR RÉCIPIENT DE POUDRE

(30) Priorität: 26.09.2016 DE 102016118081
(43) Veröffentlichungstag der Anmeldung: 31.07.2019
(73) Patentinhaber: Ferton Holding S.A., 2800 Delémont (CH)
(72) Erfinder: LEBRETON, Etienne, 1023 Crissier (CH); BEANI, Florent Jean-Claude Georges, 01170 Gex (FR); BERTOLOTE, Tiago, 1218 Le Grand-Saconnex (CH); DONNET, Marcel, 01530 Saint Jean de Gonville (FR)
(74) Vertreter: Müller Schupfner & Partner Patent- und Rechtsanwaltspartnerschaft mbB
(86) Internationale Anmeldenummer: PCT/EP2017/072793
(87) Internationale Veröffentlichungsnummer: WO 2018/054716

(56) Entgegenhaltungen:
- EP-A1- 0 119 735
- EP-A1- 0 643 947
- EP-A1- 1 972 295
- JP-A- H11 104 149
- JP-A- 2007 190 295
- US-A- 3 852 918

## Beschreibung

Die vorliegende Erfindung betrifft ein Zahnreinigungssystem, insbesondere ein dentales Pulverstrahlreinigungssystem, und einen Pulverbehälter. Zahnreinigungssysteme der in Rede stehenden Art sind z.B. aus der EP 1 972 295 bekannt und umfassen in der Regel einen Pulverbehälter bzw. eine Pulverkammer, zur Aufbewahrung eines Dentalreinigungspulvers bzw. zum Vermischen desselben mit Luft, insbesondere Druckluft, um ein Pulver-/Luftgemisch zu erzeugen, welches dann, beispielsweise mittels eines geeigneten Handstücks, ggf. unter Beimengung von Wasser, zur Zahnreinigung verwendet werden kann. Hierbei ist es üblich, den oder die Pulverbehälter in oder auf einem Gerät bzw. auf einer entsprechenden Station anzuordnen oder aufzusetzen. Über diese Station erfolgt die Zuleitung von Luft mit einem bestimmten Druck. Je nach Ausgestaltung der Station bzw. des Pulverbehälters erfolgt auch die Ableitung des vorgenannten Pulver-/Luftgemisches aus dem Pulverbehälter über die Station.

Abhängig von der Art des verwendeten (Zahnreinigungs-)Pulvers muss der Druck im Pulverbehälter entsprechend eingestellt bzw. gewählt werden, um eine geeignete Verwirbelung zu gewährleisten. Insbesondere die Teilchen-/Partikelgröße des Pulvers stellt dabei eine entscheidende Einflussgröße dar, da beispielsweise sehr feine Pulver einen geringeren Druck benötigen als gröbere Pulver.

Aus dem Stand der Technik ist es bekannt, die Stationen mit einer Sensorik und entsprechenden Druckreglern auszustatten, worüber erkannt werden kann, welcher "Typ" Pulver gerade verwendet wird bzw. welcher "Typ" Pulverbehälter gerade an der Station angeschlossen ist. Der Druckregler regelt dann den gewünschten Luftdruck, in der Regel in oder vor der Station, die den Pulverbehälter trägt.

Problematisch dabei ist, dass dieser Ansatz äußerst komplex ist: die Pulverbehälter müssen entsprechend ausgebildet sein, damit sie auch "erkannt" werden können, die Sensorik muss zuverlässig arbeiten, um die verschiedenen Typen von Pulverbehältern zu erkennen, und es muss die "Rechenleistung" in der Station vorgehalten werden, um die erfassten Informationen zu verarbeiten und den Druckregler anzusteuern etc. Hinzu kommt, dass für eine reibungslose Funktion sichergestellt werden muss, dass sämtliche der vorgenannten Komponenten, sei es mechanisch, elektronisch oder softwaretechnisch, einwandfrei funktionieren.

Der Stand der Technik kennt ferner aus der EP 0 643 947 A1 ein dentaltechnisches Sandstrahlgerät mit einem Strahlmittelbehälter, der zum Mischen des Strahlmittels mit einem Fördergasstrom in Bodennähe eine Druckgasdüse enthält, die in Verbindung mit einer Einlassöffnung für das Strahlmittel in einen freistehenden Förderkanal gerichtet ist, der in Abstand von der Einlassöffnung eine zu dem druckfest verschließbaren Strahlmittelbehälter offene Entspannungsöffnung aufweist.

Die EP 0 119 735 A beschreibt eine Vorrichtung zur Reinigung von Zähnen, bei der ein Luftstrom mit darin befindlichen mitgerissenen Reinigungspulverpartikeln auf die zu reinigende Zahnoberfläche gerichtet wird, wobei das Gerät eine Spendevorrichtung für das Reinigungspulver aufweist, um einen kontrollierten Strom von Reinigungspulverpartikeln zu gewährleisten.

Aus der EP 1 972 295 A1 ist ein Pulverbehälter für ein Pulverstrahlgerät mit einer Pulveraufnahme und einer Wirbelkammer beschrieben, in der unter Druck stehendes und über mindestens einen Gaseintritt eintretendes Gas Pulver verwirbelt und als Pulver-Gas-Gemisch über eine Auslassöffnung mindestens eines Gemischaustritts des Pulverbehälters abführt, wobei der Pulverbehälter einen Kupplungsbereich zum dichtenden Verbinden des sich im Kupplungsbereich angeordneten Gaseintritts und des sich im Kupplungsbereich angeordneten Gemischaustritts mit entsprechenden Anschlüssen eines Pulverstrahlgeräts aufweist.

Die US 3 852 918 beschreibt eine weitere Vorrichtung zur Abgabe eines mit Schleifmitteln beladenen Druckgasstroms mit einem Behälter, an den eine Schleifmittelleitung zur Abgabe des mit Schleifmittel beladenen Druckgasstroms angeschlossen ist. Dabei ist zwischen der Druckgaszuleitung und der Schleifmittelzuleitung ein Venturirohr vorgesehen ist.

Aus der JP 2007 190 295 A ist ferner eine Zahnoberflächenreinigungsvorrichtung bekannt, die einen Flüssigkeitsspeicherabschnitt, der eine Flüssigkeit speichert, und eine Pumpe, die die in dem Flüssigkeitsspeicherabschnitt gespeicherte Flüssigkeit zuführt, umfasst.

Die JP H11 104 149 A betrifft ein Handgerät für ein Pulverstrahlgerät, mit dem Zähne mittels eines Pulver-Gas-Gemischs behandelt werden können. Dabei umfasst das Handgerät eine Regulierungsdrossel.

Es ist daher eine Aufgabe der vorliegenden Erfindung, ein Zahnreinigungssystem, einen Pulverbehälter sowie einen Einsatz für einen Pulverbehälter anzugeben, welche die vorgenannten Nachteile beseitigen und die Einstellung eines Drucks im Pulverbehälter vereinfachen.

Diese Aufgabe wird durch ein Zahnreinigungssystem gemäß Anspruch 1 und durch einen Pulverbehälter gemäß Anspruch 9. Weitere Vorteile und Merkmale ergeben sich aus den Unteransprüchen sowie der Beschreibung und den beigefügten Figuren.

Erfindungsgemäß umfasst ein Zahnreinigungssystem, insbesondere ein dentales Pulverstrahlreinigungssystem, einen Pulverbehälter, wobei der Pulverbehälter einen Einlass, insbesondere für Druckluft, aufweist, und wobei der Pulverbehälter einen vom Einlass beabstandeten Auslass, insbesondere für ein Pulver-/Luftgemisch, aufweist, und wobei der Auslass mit einem Leitungssystem in Verbindung steht, worüber ein Fluid, insbesondere ein in dem Pulverbehälter gebildetes Pulver-/Luftgemisch, aus dem Pulverbehälter geleitet werden kann, derart, dass ein Strömungswiderstand des Einlasses derart relativ zu einem Strömungswiderstand des Auslasses und/oder des Leitungssystems ausgelegt, insbesondere dimensioniert, ist, dass ein vorgegebener Druckverlust über den Einlass eingestellt ist.

Bevorzugt ist der Auslass am oberen Ende des Pulverbehälters angeordnet und führt das Pulver-/Luftgemisch über eine separate Leitung nach außen. Weiter bevorzugt endet der Einlass am Eingang zum, d.h. insbesondere am unteren Ende des Pulverbehälters, so dass die Druckluft Pulver an diesem Ende aufwirbelt und mit dem Luftstrom in eine Wirbelkammer führt, die beispielsweise durch einen Einsatz gebildet ist, der im Pulverbehälter angeordnet ist.

Gemäß einer Ausführungsform umfasst das Zahnreinigungssystem eine Station oder ein (Grund-)Gerät, auf welcher/m der Pulverbehälter, bevorzugt austauschbar, angeordnet ist. Hierzu ist an der Station zweckmäßigerweise ein entsprechender Anschlussbereich vorgesehen bzw. mehrere Anschlussbereiche, wenn mehrere Pulverbehälter angeschlossen werden sollen. Der Anschlussbereich weist entsprechende Anschlüsse auf, um Druckluft in den Pulverbehälter zu leiten. Das angesprochene Leitungssystem kann direkt an den Pulverbehälter angeschlossen sein, es kann alternativ aber auch in der vorgenannten Station ausgebildet bzw. angeordnet sein. Die Ableitung des in der Pulverkammer gebildeten Pulver-/Luftgemisches kann also ggf. auch über die Station erfolgen, an welcher dann seinerseits eine entsprechende Leitung angeordnet ist, welche auch Teil des Leitungssystems ist.

Das Leitungssystem endet bevorzugt in einem Handstück, welches durch das Leitungssystem mit der Station bzw. mit dem Pulverbehälter verbunden ist. Im Handstück, im Leitungssystem oder auch innerhalb der Station kann das Pulver/Luftgemisch gemäß verschiedener Ausführungsformen beispielsweise noch mit Wasser gemischt werden. Das Handstück ist auch als Teil des Leitungssystems zu verstehen.

Entscheidend ist vorliegend, dass der Strömungswiderstand des Einlasses derart relativ zum Strömungswiderstand des Auslasses und/oder des Leitungssystems dimensioniert ist, dass ein vorgegebener Druckverlust über den Einlass eingestellt ist bzw. werden kann. Es müssen also keine aufwendige Sensorik und kein Druckregler vorgehalten werden, um einen gewünschten Druck im Pulverbehälter zu erzeugen. Insbesondere kann auf die "Informationsübertragung" vom Pulverbehälter zur Station und auf die damit einhergehende Komplexität verzichtet werden. Ein gewünschtes Druckniveau wird vielmehr über die Anpassung der Strömungswiderstände erreicht, insbesondere über das Anpassen eines "Verhältnisses" der Strömungswiderstände. Die Höhe des Drucks im Pulverbehälter ist entscheidend verantwortlich für die Erzeugung des Pulver-/Luftgemisches und variiert insbesondere mit der Art des verwendeten Pulvers. Insbesondere bei der Verwendung sehr feiner Pulver muss der Druck beispielsweise geringer sein als bei Verwendung von Pulvern mit größeren Partikelgrößen. Indem der Strömungswiderstand des Einlasses relativ zum Strömungswiderstand des Auslasses des Pulverbehälters und/oder des Leitungssystems abgestimmt ist bzw. wird, kann ein vorgegebener Druckverlust über den Einlass bzw. kann ein gewünschtes Druckniveau im Pulverbehälter eingestellt werden.

Bei dem Pulverbehälter handelt es sich um das Bauteil, welches zur Aufbewahrung des Pulvers dient und in welchem in der Regel jedenfalls teilweise die Mischung bzw. Verwirbelung mit der Druckluft erfolgt. Der Pulverbehälter kann auch derart mehrteilig ausgebildet sein, dass er eine Pulverkammer in der Gestalt eines Einsatzteiles umfasst, in welcher das Pulver bevorratet ist und in welcher die Verwirbelung mit bzw. die Zumischung der Luft erfolgt. Zweckmäßigerweise weist der Pulverbehälter ein entsprechendes Bodenelement und ein entsprechendes Deckelelement auf. Der vorgenannte Einlass und/oder der vorgenannte Auslass können auch direkt in oder an der Pulverkammer angeordnet/ausgebildet sein.

Vorteilhafterweise wird der Strömungswiderstand des Auslasses und/oder des Leitungssystems bei der Dimensionierung bzw. Auslegung des Strömungswiderstands des Einlasses berücksichtigt. Insbesondere werden die Strömungswiderstände durch Drosselquerschnitte bestimmt bzw. durch deren Größe.

Erfindungsgemäß umfasst der Einlass eine Einlassdüse sowie eine Blende, wobei die Blende einen Einlassdrosselquerschnitt aufweist, welcher den Strömungswiderstand des Einlasses bestimmt.

Alternativ kann auch auf die Blende verzichtet werden, sodass der maßgebliche Einlassdrosselquerschnitt ein insbesondere voreinstellbarer Drosselquerschnitt der Einlassdüse ist.

Zweckmäßigerweise wird der Strömungswiderstand des Auslasses durch einen Referenzdrosselquerschnitt bestimmt, wobei der Referenzdrosselquerschnitt ein Auslassdrosselquerschnitt des Auslasses und/oder ein Drosselquerschnitt des Leitungssystems ist. Insbesondere handelt es sich bei dem Referenzdrosselquerschnitt um einen minimalen Drosselquerschnitt, welcher der Auslassdrosselquerschnitt oder ein Drosselquerschnitt des Leitungssystems, beispielsweise auch des Handstücks, sein kann. Der Referenzdrosselquerschnitt ist also, bezogen auf eine Strömungsrichtung des Pulver-/Luftgemisches, ein Drosselquerschnitt, welcher hinter dem Einlassdrosselquerschnitt angeordnet ist. Der Referenzdrosselquerschnitt ist insbesondere deshalb ein minimaler Drosselquerschnitt, da der minimale Drosselquerschnitt den Strömungswiderstand des Gesamtsystems am deutlichsten beeinflusst, sobald das Fluid bewegt wird.

Der Einlassdrosselquerschnitt ist bevorzugt kleiner oder gleich dem Referenzdrosselquerschnitt. Die Drosselquerschnitte werden dabei bevorzugt als runde, insbesondere kreisrunde, Öffnungen ausgebildet.

Gemäß einer bevorzugten Ausführungsform beträgt ein Luftdruck vor dem Einlass, beispielsweise also noch innerhalb der Station, etwa 4,2 bis 4,8 bar, beispielsweise 4,5 bar. Bei einem Einlassdrosselquerschnitt mit einem Durchmesser von etwa 0,6 mm und einem Referenzdrosselquerschnitt, welcher leicht größer ist, kann ein Druck in der Pulverkammer von etwa 2,8 bis 3,2 bar, beispielsweise 3,0 bar eingestellt werden. Ist der Referenzdrosselquerschnitt ähnlich bzw. in etwa gleich groß wie der Einlassdrosselquerschnitt dimensioniert, beispielsweise ebenfalls mit einem Durchmesser von etwa 0,6 mm, so kann im Pulverbehälter ein Druck von etwa 2,9 bis 3,5 bar eingestellt werden, beispielsweise 3,2 bar. Der Druckverlust über den Einlass ist also niedriger.

Demgegenüber ergibt sich für den Fall, dass der Einlassdrosselquerschnitt größer als der Referenzdrosselquerschnitt ist, beispielsweise 0,8 mm, ein Druck in dem Pulverbehälter von etwa 3,4 bis 4 bar, beispielsweise 3,7 bar. Hierbei ist zu beachten, dass bei den vorgenannten Druckwerten immer der dynamische Druck gemeint ist, also der Druck, der sich während der Behandlung bzw. im Betrieb einstellt, nicht der Ruhedruck.

Ein Druck von bis zu 4 bar wäre für die Verwirbelung sehr feiner Pulver, beispielsweise mit einer mittleren Partikelgröße von kleiner als etwa 25 µm, bereits deutlich zu hoch. Durch eine Reduktion des Einlassdrosselquerschnitts kann das Druckniveau mit Vorteil deutlich reduziert werden. Entscheidend ist dabei, dass es nicht lediglich ausreicht, einen Einlassdrosselquerschnitt zu verkleinern, um einen Druckverlust zu erhöhen. Wichtig ist, auch den (nachfolgenden) Referenzdrosselquerschnitt zu berücksichtigen. Wie das vorherige Beispiel zeigt, kann damit trotz einer Verkleinerung des Einlassdrosselquerschnitts, abhängig von dessen Größe zum Referenzdrosselquerschnitt, das Druckniveau im Pulverbehälter, bei Bedarf, wieder etwas angehoben werden.

In bevorzugten Ausführungsformen liegt ein Durchmesser des Einlassdrosselquerschnitts in einem Bereich von etwa 0,4 bis 1,8 mm, bevorzugt in einem Bereich von etwa 0,6 bis 1,2 mm, besonders bevorzugt zwischen 0,5 und 1,0 mm, z.B. bei 0,8 mm. Gleiches gilt für den Referenzdrosselquerschnitt. Ein Verhältnis des Durchmessers des Einlassdrosselquerschnitts zum Durchmesser des Referenzdrosselquerschnitts liegt in bevorzugten Ausführungsformen in einem Bereich von etwa 0,2 bis 1,2, besonders bevorzugt in einem Bereich von etwa 0,3 bis 1.

Dabei ist zu berücksichtigen, dass der Referenzdrosselquerschnitt in der Regel der Düsenquerschnitt am Handstück ist, da hier eine möglichst große Energie zur Beschleunigung der Pulver-Partikel bereitstehen muss. Der Referenzdrosselquerschnitt muss aber nicht immer der engste, d.h. kleinste Querschnitt im Leitungssystem sein, denn auch der Einlassdrosselquerschnitt kann einen vergleichbaren Durchmesser oder sogar einen leicht kleineren Durchmesser für eine wirksame Druckreduzierung aufweisen.

Die vorgenannten Beispiele zeigen, dass sich das Druckniveau im Pulverbehälter sehr genau durch die Berücksichtigung des Referenzdrosselquerschnitts bei der Dimensionierung des Einlassdrosselquerschnitts einstellen lässt. Der Luftdruck, den die Station bereitstellt, kann dabei immer auf einem gleichen/ähnlichen Niveau liegen (beispielsweise ca. 4,5 bar) und muss vorteilhafterweise nicht, wie im Stand der Technik, durch Druckregler reguliert werden.

In bevorzugten Ausführungsformen beträgt ein Druckabfall, welcher über die vorgenannten Größen und Verhältnisse über den Einlass erreicht werden kann, etwa 10 - 70 %, bevorzugt zwischen 20 und 50 %.

Der zur Verfügung stehende Luftdruck gemäß einer bevorzugten Ausführungsform der Erfindung beträgt vorzugsweise zwischen 2,5 bis 5 bar. Der Düsenquerschnitt am Handstück als bestimmende Größe für Luft und Pulvermenge beträgt dann etwa 0,65 mm - Variation von +/-0,15 mm sind denkbar. Daraus ergeben sich bevorzugte Querschnitte für den Einlassdrosselquerschnitt ebenfalls in einem Bereich von +/- 0,2 mm zum Düsenquerschnitt am Handstück. Die Einlassdrosselquerschnitte bewegen sich damit in einem Bereich von etwa +/- 30% zum Referenzdrosselquerschnitt, bei bevorzugten Ausführungsformen zwischen -10% bis +25%. Der Durchmesser der Einlassdüse zur Verwirbelung beträgt bei dieser bevorzugten Ausführungsform 1 mm.

Vorteilhafterweise umfasst der Einlass gemäß einer Ausführungsform ein Entenschnabelventil bzw. ein Lippenrückschlagventil, welches bevorzugt zwischen der Blende und der Einlassdüse angeordnet ist. Insbesondere ist das Entenschnabelventil derart angeordnet, dass es in Strömungsrichtung durch den anliegenden (Luft-)Druck geöffnet werden kann. Dies bedeutet, dass der Einlass über das Entenschnabelventil automatisch verschlossen ist, wenn kein Druck anliegt. Ein derartiger Pulverbehälter kann entnommen und gehandhabt werden, ohne dass Pulver austritt, welches den Behandlungsraum verunreinigen würde. Alternativ kann das Entenschnabelventil in Strömungsrichtung gesehen auch vor der Blende angeordnet sein. Ebenso alternativ kann ggf. auf die Verwendung einer Blende verzichtet werden.

Erfindungsgemäß umfasst der Einlass eine erste Verstelleinrichtung, welche ausgelegt ist, den Druckverlust zu regulieren bzw. dessen Höhe zu adaptieren, insbesondere über eine Verstellung des Einlassdrosselquerschnitts. Erfindungsgemäß ist hierbei die Blende austauschbar bzw. auswechselbar ausgebildet. Die Blende kann z. B. durch einen Rohreinsatz gebildet sein, welcher an einem seiner Enden eine Öffnung aufweist, die als "Blende" wirkt. Diese Öffnung kann ggf. auch gegenüber einem Durchmesser des Rohreinsatzes verkleinert sein, sodass leicht "unterschiedliche" Rohreinsätze eingesetzt werden können, welche sich lediglich in der Ausgestaltung der Öffnung unterscheiden. Die Blende kann auch ein plattenförmiges/flächiges Bauteil sein, welches eine oder mehrere Öffnungen, die als unterschiedlich große Drosselquerschnitte wirken, umfasst. Mit Vorteil kann durch dann z. B. durch Verdrehen oder Verschieben dieses Bauteils ein unterschiedlicher Einlassdrosselquerschnitt eingestellt werden, je nachdem welcher Einlassdrosselquerschnitt gerade "aktiv/durchströmt" sein soll. Alternativ ist das Bauteil als solches auch austauschbar gestaltet.

Erfindungsgemäß ist der Einlass (als solches) als Einsatz ausgebildet, welcher austauschbar gestaltet ist, wobei der Einsatz z. B. ein Bodenelement des Pulverbehälters ist bzw. ein Teil eines Bodenelements des Pulverbehälters.

Gemäß einer Ausführungsform sind der Einsatz und/oder die Blende ausgelegt, ein Druckverlustniveau bzw. ein (eingestelltes) Druckniveau im Pulverbehälter anzugeben oder anzuzeigen, beispielsweise durch eine Muster- und/oder Farbkodierung oder eine Dimensionierung des Einsatzes. In ähnlicher Weise kann natürlich auch der Pulverbehälter als solches entsprechend kodiert sein. Wenn das Handstück den Referenzdrosselquerschnitt umfasst, kann beispielsweise durch eine entsprechende farbliche Abstimmung des Handstücks und des Pulverbehälters bzw. des Einsatzes oder der Blende automatisch durch Kombination der "richtigen" Komponenten der Druck im Pulverbehälter eingestellt werden, ohne dass hierzu eine Sensorik notwendig ist.

Gemäß einer Ausführungsform ist der Referenzdrosselquerschnitt durch eine zweite Verstelleinheit verstellbar. Auch hier können beispielsweise im Leitungssystem an entsprechender Stelle entsprechenden Blenden eingesetzt werden.

Gemäß einer Ausführungsform ist der Referenzdrosselquerschnitt durch einen Austausch einer oder mehrerer Düsen, beispielsweise im Leitungssystem oder im Handstück, verstellbar. Insbesondere ist der Referenzdrosselquerschnitt auch durch das angeordnete Handstück an sich verstellbar. Auch die Einlassdüse als solche kann austauschbar ausgestaltet sein, wobei der Austausch besonders vorteilhaft über die Verwendung eines entsprechenden Einsatzes erfolgt. Im Gegensatz zur Einlassdüse ist dieser nämlich vorteilhafterweise von außen "erkennbar", sodass ein Benutzer schnell erkennen kann, welches Druchniveau dieser Behälter z. B. bereitstellt.

Die Erfindung betrifft auch einen Pulverbehälter als solches, insbesondere für ein erfindungsgemäßes Zahnreinigungssystem, aufweisend einen Einlass für ein Fluid, insbesondere für Druckluft, wobei ein Einlassdrosselquerschnitt des Einlasses verstellbar ist.

Der erfindungsgemäße Pulverbehälter weist den Einsatz auf, der den Einlass umfasst. Sowohl für den erfindungsgemäßen Pulverbehälter gelten die im Zusammenhang mit dem Zahnreinigungssystem erwähnten Vorteile und Merkmale analog und entsprechend.

Weitere Vorteile und Merkmale ergeben sich aus der nachfolgenden Beschreibung einer bevorzugten Ausführungsform, insbesondere eines Pulverbehälters, in Bezug auf die beigefügten Figuren.

Es zeigen:
- Figur 1:: eine Schnittdarstellung einer bevorzugten Ausführungsform eines Pulverbehälters;
- Figuren 2 und 3:: Teilansichten, wie skizziert in Figur 1, mit Einlässen, welche unterschiedliche Strömungswiderstände erzeugen.

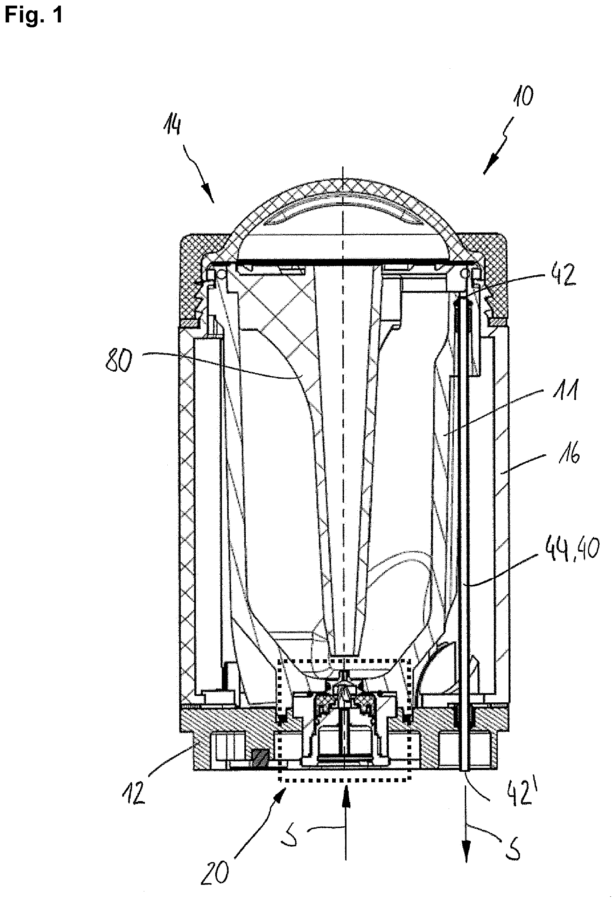

**Fig. 1** zeigt in einer Schnittdarstellung einen Pulverbehälter 10, umfassend eine Wand bzw. Wandung 16, innerhalb derer eine als Einsatzteil ausgebildete Pulverkammer 11 angeordnet ist. An seinem unteren Ende weist der Pulverbehälter 10 ein Bodenelement 12 auf, an seinem oberen Ende ein Deckelelement 14. Innerhalb der Pulverkammer 11 ist ein Venturirohr 80 angeordnet. Nicht dargestellt ist ein Pulver, welches sich innerhalb der Pulverkammer 11 befindet. Der vertikale, in Richtung des Pulverbehälters 10 zeigende, Pfeil, gekennzeichnet mit dem Bezugszeichen S, deutet eine Strömungsrichtung, insbesondere eine Einlassströmungsrichtung einer (Druck-)Luft an. Im Pulverbehälter 10 ist weiter ein, einen Auslass 40 bildendes, Auslassrohr 44 angeordnet, über welches die Ableitung eines innerhalb der Pulverkammer 11 gebildeten Pulver-/Luftgemisches erfolgt.

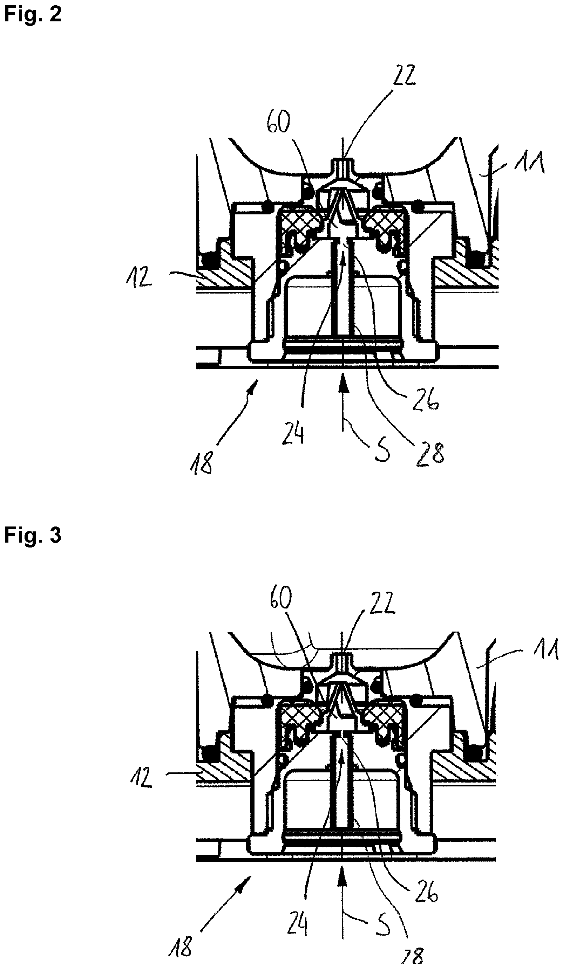

Auch hier wird durch einen in diesem Fall nach unten zeigenden Pfeil mit dem Bezugszeichen S eine Strömungsrichtung, insbesondere eine Auslassströmungsrichtung, angegeben. Der Pulverbehälter 10 umfasst in diesem hier gezeigten Beispiel zwei Auslassdrosselquerschnitte 42, 42'. Die beiden Auslassdrosselquerschnitte 42, 42' können einen Referenzdrosselquerschnitt darstellen. Gegebenenfalls stellt aber auch nur der kleinere der beiden Auslassdrosselquerschnitte 42, 42' den Referenzdrosselquerschnitt dar. Entscheidend ist das Zusammenspiel des Referenzdrosselquerschnitts mit der Ausgestaltung bzw. Dimensionierung des Einlasses 20. Der Referenzdrosselquerschnitt kann auch durch ein hier nicht gezeigtes Leitungssystems festgelegt sein. Der mit den Punkten umrandete Bereich des Pulverbehälters 10, welcher den Einlass 20 umfasst, ist in den Figuren 2 und 3 detailliert herausgestellt.

**Fig. 2** zeigt den in Figur 1 skizzierten Bereich in einer größeren Darstellung. Zu sehen ist insbesondere das Bodenelement 12, in welchem ein Einsatz 18 angeordnet ist, welcher eine Einlassdüse 22 umfasst, wobei in Strömungsrichtung S gesehen vor der Einlassdüse 22 ein Entenschnabelventil bzw. ein Lippenrückschlagventil 60 angeordnet ist. Vor diesem wiederum befindet sich eine Blende 24, welche einen Einlassdrosselquerschnitt 26 umfasst. In der hier gezeigten Ausführungsform ist die Blende 24 als Teil eines Rohreinsatzes 28 ausgebildet, welcher gegebenenfalls austauschbar ausgebildet ist.

Mit Bezug auf die **Fig. 3**, ist deutlich zu erkennen, dass ein dort gezeigter Einlassdrosselquerschnitt 26 deutlich größer ausgebildet ist. Im Übrigen unterscheiden sich die Figuren nicht, so dass auf weitere Erklärungen verzichtet wird.

Deutlich zu sehen ist, dass das Entenschnabelventil bzw. das Lippenrückschlagventil 60 derart angeordnet ist, dass es durch einen Druck, insbesondere einen Luftdruck, entlang der Strömungsrichtung S geöffnet werden kann. Liegt kein Druck an, so ist das Entenschnabelventil bzw. das Lippenrückschlagventil 60 automatisch verschlossen und über die Einlassdüse 22 kann kein Pulver mehr entweichen. In der in den Figuren 1 bis 3 gezeigten Ausführungsform ist der Einsatz 18 sogar mehrteilig, insbesondere zweiteilig, ausgebildet, und über entsprechende Dichtungselemente, vgl. die hier nicht näher benannten O-Ringe, zueinander und gegenüber der Pulverkammer 11 gedichtet. Das Bodenelement 12 weist eine entsprechende Geometrie zur Anordnung an einer hier nicht gezeigten Station/ (Grund-)gerät auf, worüber der Luftdruck in den Pulverbehälter 10 eingeleitet und das Pulver-/Luftgemisch abgeleitet werden können. Die in der Figur 1 gezeigten Auslassdrosselquerschnitte 42 bzw. 42' sind stellvertretend als mögliche Referenzdrosselquerschnitte genannt. Ein Referenzdrosselquerschnitt kann aber auch, wie erwähnt, in einem hier nicht gezeigten Leitungssystem, welches sich in der Station oder in der Leitung zum Handstück oder in dem Handstück selbst befindet, ausgebildet sein.

### Bezugszeichenliste

- 10: Pulverbehälter/Pulverkammer
- 11: Einsatzteil/Pulverkammer
- 12: Bodenelement
- 14: Deckelelement
- 16: Wand/Wandung
- 18: Einsatz
- 20: Einlass
- 22: Einlassdüse
- 24: Blende
- 26: Einlassdrosselquerschnitt
- 28: Rohreinsatz
- 40: Auslass
- 42, 42': Auslassdrosselquerschnitt
- 44: Auslassrohr
- 60: Entenschnabelventil, Lippenrückschlagventil
- 80: Venturirohr
- S: Strömungsrichtung

## Patentansprüche

1. Zahnreinigungssystem, insbesondere dentales Pulverstrahlreinigungssystem,
umfassend einen Pulverbehälter (10),
wobei der Pulverbehälter (10) einen Einlass (20), insbesondere für Druckluft, aufweist, und
wobei der Pulverbehälter (10) einen vom Einlass beabstandeten Auslass (40), insbesondere für ein Pulver-/Luftgemisch, aufweist und
wobei der Auslass (40) mit einem Leitungssystem in Verbindung steht, worüber ein Fluid, insbesondere ein in dem Pulverbehälter (10) gebildetes Pulver-/Luftgemisch, aus dem Pulverbehälter (10) geleitet werden kann, und wobei ein Strömungswiderstand des Einlasses (20) derart relativ zu einem Strömungswiderstand des Auslasses (40) und/oder des Leitungssystems ausgelegt ist, dass ein vorgegebener Druckverlust über den Einlass (20) eingestellt ist, wobei der Einlass (20) eine Einlassdüse (22) sowie eine Blende (24) umfasst,
wobei die Blende (24) einen Einlassdrosselquerschnitt (26) aufweist, welcher den Strömungswiderstand des Einlasses (20) bestimmt, wobei der Einlass (20) eine erste Verstelleinrichtung umfasst, welche ausgelegt ist, den Druckverlust, insbesondere über eine Verstellung des Einlassdrosselquerschnitts (26), zu regulieren und wobei die Blende (24) austauschbar ausgebildet ist, **dadurch gekennzeichnet, dass** der Einlass (20) als Einsatz (18) ausgebildet ist, welcher austauschbar gestaltet ist.

2. Zahnreinigungssystem nach Anspruch 1 ,
wobei der Strömungswiderstand des Auslasses (40) durch einen Referenzdrosselquerschnitt bestimmt wird, und
wobei der Referenzdrosselquerschnitt ein Auslassdrosselquerschnitt (42) des Auslasses (40) und/oder ein Drosselquerschnitt des Leitungssystems ist.

3. Zahnreinigungssystem nach einem der Ansprüche 1 oder 2,
wobei der Einlassdrosselquerschnitt (26) kleiner oder gleich dem Referenzdrosselquerschnitt ist.

4. Zahnreinigungssystem nach einem der Ansprüche 1-3,
wobei der Einlass (20) ein Entenschnabelventil/Lippenrückschlagventil (60) umfasst, welches bevorzugt zwischen der Blende (24) und der Einlassdüse (22) angeordnet ist.

5. Zahnreinigungssystem nach einem der vorhergehenden Ansprüche, wobei der Einsatz (18) ein Bodenelement (12) des Pulverbehälters (10) ist.

6. Zahnreinigungssystem nach Anspruch 5,
wobei der Einsatz (18) und/oder die Blende (24) ausgelegt sind, ein Druckverlustniveau anzugeben oder anzuzeigen, beispielsweise durch eine Muster- und/oder Farbkodierung oder eine Dimensionierung des Einsatzes (18).

7. Zahnreinigungssystem nach einem der Ansprüche 2-6,
wobei der Referenzdrosselquerschnitt durch eine zweite Verstelleinheit verstellbar ist.

8. Zahnreinigungssystem nach einem der Ansprüche 2-7,
wobei der Referenzdrosselquerschnitt durch einen Austausch einer oder mehrerer Düsen verstellbar ist.

9. Pulverbehälter (10) für ein Zahnreinigungssystem nach einem der vorhergehenden Ansprüche,
aufweisend einen Einlass (20) für ein Fluid, insbesondere für (Druck-)Luft, wobei ein Einsatz (18) den Einlass (20) umfasst,
wobei ein Einlassdrosselquerschnitt (26) des Einlasses (20) verstellbar ist, wobei der Einlass (20) eine Einlassdüse (22) sowie eine Blende (24) umfasst,
wobei die Blende (24) den Einlassdrosselquerschnitt (26) aufweist, welcher den Strömungswiderstand des Einlasses (20) bestimmt, wobei der Einlass (20) eine erste Verstelleinrichtung umfasst, welche ausgelegt ist, den Druckverlust, insbesondere über eine Verstellung des Einlassdrosselquerschnitts (26), zu regulieren, wobei die Blende (24) austauschbar ausgebildet ist **dadurch gekennzeichnet, dass** der Einlass (20) als Einsatz (18) ausgebildet ist, welcher austauschbar gestaltet ist.

## Claims

1. A tooth cleaning system, especially dental powder jet cleaning system, comprising a powder container (10),
wherein the powder container (10) has an inlet (20), in particular for compressed air, and wherein the powder container (10) has an outlet (40) spaced from the inlet, in particular for a powder/air mixture, and
wherein the outlet (40) communicates with a conduit system, via which a fluid, in particular a powder/air mixture formed in the powder container (10), can be conducted out of the powder container (10), and wherein a flow resistance of the inlet (20) is configured relative to a flow resistance of the outlet (40) and/or of the conduit system in such a way that a predetermined pressure loss across the inlet (20) is set, wherein the inlet (20) comprises an inlet nozzle (22) as well as an aperture (24),
wherein the aperture (24) has an inlet throttle cross-section (26), which determines the flow resistance of the inlet (20), wherein the inlet (20) comprises a first adjusting device, which is configured to regulate the pressure loss, in particular via an adjustment of the inlet throttle cross-section (26), and wherein the aperture (24) is configured to be replaceable, **characterized in that** the inlet (20) is configured as an insert (18), which is configured to be replaceable.

2. The tooth cleaning system according to claim 1 ,
wherein the flow resistance of the outlet (40) is determined by a reference throttle cross-section, and wherein
the reference throttle cross-section is an outlet throttle cross-section (42) of the outlet (40) and/or a throttle cross-section of the conduit system.

3. The tooth cleaning system according to one of claims 1 or 2,
wherein the inlet throttle cross-section (26) is smaller than or equal to the reference throttle cross-section.

4. The tooth cleaning system according to any one of claims 1-3,
wherein the inlet (20) comprises a duckbill valve/lip check valve (60), preferably located between the aperture (24) and the inlet nozzle (22).

5. The tooth cleaning system according to any of the preceding claims,
wherein the insert (18) is a bottom element (12) of the powder container (10).

6. The tooth cleaning system according to claim 5,
wherein the insert (18) and/or the aperture (24) are adapted to indicate or display a pressure loss level, for example by pattern and/or colour coding or dimensioning of the insert (18).

7. The tooth cleaning system according to any one of claims 2-6,
wherein the reference throttle cross-section is adjustable by a second adjustment device.

8. The tooth cleaning system according to any one of claims 2-7,
wherein the throttle cross-section is adjustable by an exchange of one or more nozzles.

9. A powder container (10) for a tooth cleaning system according to one of the preceding claims,
comprising an inlet (20) for a fluid, in particular for (pressurized) air, wherein an insert (18) comprises the inlet (20),
wherein an inlet throttle cross-section (26) of the inlet (20) is adjustable,
wherein the inlet (20) comprises an inlet nozzle (22) as well as an aperture (24), wherein the
aperture (24) comprises the inlet throttle cross-section (26), which determines the flow resistance of the inlet (20), wherein the inlet (20) comprises a first adjusting device, which is configured to regulate the pressure loss, in particular by adjusting the inlet throttle cross-section (26), wherein the aperture (24) is configured to be replaceable, **characterized in that** the inlet (20) is configured as an insert (18) which is configured to be replaceable.

## Revendications

1. Système de nettoyage dentaire, en particulier système de nettoyage dentaire par jet de poudre, comprenant un récipient à poudre (10),
dans lequel
le récipient à poudre (10) présente une entrée (20), en particulier pour de l'air comprimé, et
le récipient à poudre (10) présente une sortie (40) espacée de l'entrée, en particulier pour un mélange poudre/air, et
la sortie (40) est en communication avec un système de conduit par lequel un fluide, en particulier un mélange poudre/air formé dans le récipient à poudre (10), peut être guidé hors du récipient à poudre (10), et
une résistance à l'écoulement de l'entrée (20) est établie par rapport à une résistance à l'écoulement de la sortie (40) et/ou du système de conduit de telle sorte qu'une perte de pression prédéterminée est réglée par l'intermédiaire de l'entrée (20), l'entrée (20) comprenant une buse d'entrée (22) et un diaphragme (24), et le diaphragme (24) présente une section transversale d'étranglement d'entrée (26) qui détermine la résistance à l'écoulement de l'entrée (20),
l'entrée (20) comprend un premier moyen de réglage adapté pour réguler la perte de pression, en particulier par un réglage de la section transversale de l'étranglement d'entrée (26), et
le diaphragme (24) est réalisé de façon interchangeable,
**caractérisé en ce que** l'entrée (20) est réalisée sous forme d'insert (18) qui est conçu de façon interchangeable.

2. Système de nettoyage dentaire selon la revendication 1,
dans lequel la résistance à l'écoulement de la sortie (40) est déterminée par une section transversale d'étranglement de référence, et
la section transversale d'étranglement de référence est une section transversale d'étranglement de sortie (42) de la sortie (40) et/ou une section transversale d'étranglement du système de conduit.

3. Système de nettoyage dentaire selon l'une des revendications 1 ou 2,
dans lequel la section transversale d'étranglement d'entrée (26) est inférieure ou égale à la section transversale d'étranglement de référence.

4. Système de nettoyage dentaire selon l'une des revendications 1 à 3,
dans lequel l'entrée (20) comprend un clapet en bec de canard/clapet anti-retour à lèvre (60), de préférence disposé entre le diaphragme (24) et la buse d'entrée (22).

5. Système de nettoyage dentaire selon l'une des revendications précédentes, dans lequel l'insert (18) est un élément de fond (12) du récipient à poudre (10).

6. Système de nettoyage dentaire selon la revendication 5,
dans lequel l'insert (18) et/ou le diaphragme (24) sont adaptés pour indiquer ou afficher un niveau de perte de pression, par exemple par un codage de motif et/ou un codage couleur ou par un dimensionnement de l'insert (18).

7. Système de nettoyage dentaire selon l'une des revendications 2 à 6,
dans lequel la section transversale d'étranglement de référence est réglable par une seconde unité de réglage.

8. Système de nettoyage dentaire selon l'une des revendications 2 à 7,
dans lequel la section transversale d'étranglement de référence est réglable par un échange d'une ou de plusieurs buses.

9. Récipient à poudre (10) pour un système de nettoyage dentaire selon l'une des revendications précédentes,
comprenant une entrée (20) pour un fluide, en particulier pour de l'air (comprimé), dans lequel
un insert (18) comprend l'entrée (20),
une section transversale d'étranglement d'entrée (26) de l'entrée (20) est réglable,
l'entrée (20) comprend une buse d'entrée (22) et un diaphragme (24),
le diaphragme (24) présente la section transversale d'étranglement d'entrée (26) qui détermine la résistance à l'écoulement de l'entrée (20),
l'entrée (20) comprend un premier moyen de réglage adapté pour réguler la perte de pression, en particulier par un réglage de la section transversale de l'étranglement d'entrée (26), et
le diaphragme (24) est réalisé de façon interchangeable,
**caractérisé en ce que**
l'entrée (20) est réalisée sous forme d'insert (18) qui est conçu de façon interchangeable.
